# Europäisches Patentamt

(19) European Patent Office

Office européen des brevets

(11) Publication number : **0 319 165 B1**

## EUROPEAN PATENT SPECIFICATION

(45) Date of publication of patent specification :
**18.10.95 Bulletin 95/42**

(51) Int. Cl.⁶ : **G06T 11/00**

(21) Application number : **88310811.0**

(22) Date of filing : **16.11.88**

(54) **System for using barycentric coordinates as for polygon interpolation.**

(30) Priority : **04.12.87 US 129036**

(43) Date of publication of application :
**07.06.89 Bulletin 89/23**

(45) Publication of the grant of the patent :
**18.10.95 Bulletin 95/42**

(84) Designated Contracting States :
**DE FR GB IT SE**

(56) References cited :
**EP-A- 0 116 737**

(73) Proprietor : **EVANS & SUTHERLAND
COMPUTER CORPORATION
580 Arapeen Drive
Salt Lake City Utah 84108 (US)**

(72) Inventor : **Brown, Russell A.
1951 Logan Avenue
Salt Lake City Utah 84108 (US)**
Inventor : **Jensen, Thomas W.
3125 East Kennedy Drive No.603
Salt Lake City Utah 84108 (US)**
Inventor : **Robinson, John A.
9147 Morning View Drive
Sandy Utah 84070 (US)**

(74) Representative : **Newstead, Michael John et al
Page Hargrave
Temple Gate House
Temple Gate
Bristol BS1 6PL (GB)**

## Description

Perhaps video games are the most commonly known form of computer graphics apparatus. However, the field embraces many other forms of apparatus, as for training, design, modeling and so on. Typically, such apparatus give the viewer the impression of looking through a window at a picture somewhat like that of a television receiver. To generate the picture, the computer graphics system selects content from basic forms (primitives), orients the selected pieces with respect to the window and displays them on a viewing screen as a composite.

According to one technique, picture content is developed from primitives as polygons, i.e. closed outlines bounded by straight edges. Such polygons define outlines of solid areas of gray or color and are joined to form an object or a part of an object in the desired display. Usually, the polygons are mathematically defined in three-dimensional, world space. Conventional basic practice involves orienting such polygons with respect to a viewpoint, scanning the polygons to define data for small, individual picture elements (pixels), eliminating hidden surface representations, then displaying the pixels in a perspective array on a two-dimensional screen. Essentially, the scan conversion of a polygon involves finding all the pixels that lie inside each polygon and accordingly setting the color and intensity for each pixel. In a typical display, a million pixels may compose a picture.

In accordance with prior computer graphics techniques, the picture image is stored as a pattern of binary digital numbers that represent individual pixels in a rectangular array. The numerical data representative of individual pixels is supplied in sequence to a cathode ray tube apparatus as the tube screen is scanned to display the pixels in the rectangular array. Accordingly, the pixels are presented in a raster pattern as a succession of scan lines, each of which consists of a row of pixels. The raster pattern is most familiar in television displays.

As mentioned above, computer graphics systems are capable of providing realistic images from primitives which may take the form of planar polygons. The generation of such images also involves subdividing polygons and selecting the portions of such polygons that are unobstructed to the viewer and accordingly appear in the display. In that regard, several hidden surface techniques are well known. In summary, the present state of the art in computer graphics allows the generation of dynamic realistic images by processors utilizing the techniques described above.

When geometric primitives other than planar polygons are used for model definition, the primitives often are decomposed into planar polygons, which thereafter may be further decomposed into triangular polygons for processing, as to provide better simulation or remove hidden surfaces. For example, a curved or parametric surface of a display object may be decomposed by subdivision as well known in the prior art and as treated in U. S. Patent 4,646,251, issued February 24, 1987, to Hayes, Brown, Jensen and Madsen.

While defining planar polygons to compose a picture is effective, the technique still provides an unrealistic picture. For example, it is desirable that the image of a cylinder appear as a cylinder, not as an array of discrete planar polygons joined together to approximate a cylinder. However, such shapes attain greater realism if they are smooth shaded over the surface of several polygons. The technique is illustrated and described in a book entitled "Principles of Interactive Computer Graphics", Second edition, Newman & Sproull, McGraw-Hill Book Company, 1979. Various specific shading techniques are well known in the art, and in that regard the referenced book describes both Gouraud and Phong shading techniques.

The Gouraud technique of smooth shading involves computing normals at the vertices (corners) of each polygon then computing the precise shade at each of the vertices. An interpolation is then performed to determine the shade for each pixel dissecting the polygon. Traditionally, the interpolation is performed on each polygon as it exists in perspective or screen space. That is, shading is performed after polygons have been transformed from world space to perspective space. In that regard, see chapter 22 of the referenced book, "Principles of Interactive Computer Graphics", at page 339, a section captioned "Transformations in Viewing". A similar situation exists with respect to interpolation of polygons for Phong shading.

Recapitulating to some extent, planar polygons as they exist (transformed to perspective or screen space) traditionally have been interpolated for shading or texturing. However, the transformation of polygons from world space to their two-dimensional equivalents in perspective space is a nonlinear projection, i.e. three dimensional to two dimensional. As a consequence, interpolating a polygon (for shading or texturing) after transformation to perspective space is quite different from interpolating the same polygon in world space. Although traditionally polygons have been interpolated in perspective space, such interpolation is erroneous and deters from the displayed image. In that regard, the present invention is based on a recognition that considerably improved displays result from the interpolation in world space, that is, space not subject to linear distortion. This improvement also may be obtained through interpolation of polygons in spaces other than world space which are not subject to the nonlinear distortion of perspective space. An example of another space not subject to nonlinear distortion is eye space. However, in the past, the data for such interpolation in spaces such as world space or eye space was not considered to be economically available.

In general, the system of the present invention is embodied as an effective process or product for interpolating planar polygons, as to accomplish smooth shading (or texturing) for an object defined by the polygons. Interpolation in accordance with the present invention is performed on planar polygons defined in world space and thereby enables improved displays. Specifically in that regard, the system of the present invention facilitates world-space interpolations by utilizing data in unconventional combinations. Specifically, as disclosed in detail below, readily available vectors have been discovered susceptible to manipulation as dot products and cross products to accomplish the interpolation of a polygon in world space and accordingly to effectively shade or texture objects composed of such polygons.

According to the present invention there is provided a process of interpolating a graphic object as set out in claim 1, a system for interpolating a graphic object as set out in claim 8 and a process for determining pixel data as set out in claim 9.

## Brief Description of the Drawings

In the drawings, which constitute a part of this specification, exemplary embodiments exhibiting various objectives and features hereof are set forth, specifically:

FIGURE 1 is a graphic representation of a curved surface illustrated with respect to polygon decomposition and vertex normalization as for shading in accordance herewith;

FIGURE 2 is a graphic representation illustrating a view frustum radiating from an eyepoint with respect to perspective space and world space as treated herein;

FIGURE 3 is a graphic representation illustrating barycentric coordinates with respect to a polygon as developed herein;

FIGURE 4 is a graphic representation illustrating vectors for the computation of barycentric coordinates for a polygon in accordance with the present invention;

FIGURE 5 is a graphic representation illustrating a pentagonal polygon containing a triangular polygon as discussed herein;

FIGURE 6 is a graphic representation illustrating a triangular polygon in conjunction with a quadratic, Bezier surface as discussed herein;

FIGURE 7 is a flow diagram illustrating a process in accordance with the present invention; and

FIGURE 8 is a block diagram of a structure in accordance with the present invention.

## Description of the Illustrative Embodiment

A detailed illustrative embodiment of the present invention is disclosed herein; however, it is merely representative, recognizing that a wide variety of specific embodiments of the disclosed system are possible. Nevertheless, the illustrative embodiment is deemed to afford the best embodiment for purposes of disclosure and to provide a basis for the claims herein which define the scope of the present invention.

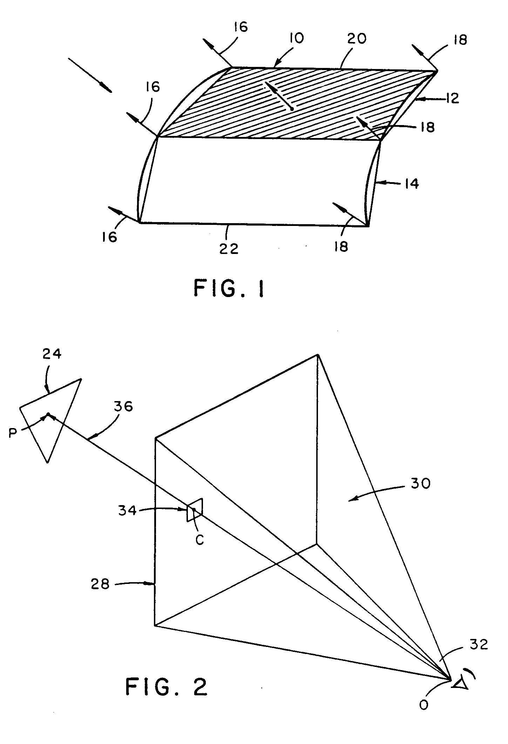

Initially, consideration of some graphic representations will be helpful as related to the present development, specifically with regard to the decomposition of conics into planar polygons. Referring to FIGURE 1, an external curved surface comprising a fragment 10 of a cylinder is illustrated in heavy lines. The cylindrical fragment 10 is crudely simulated by a pair of planar polygons 12 and 14 represented in light lines. To more closely simulate the shape of the cylinder fragment 10, an increased number of planar polygons could be used. However, for purposes of the present explanation, it can be seen that the two planar polygons 12 and 14 roughly simulate the cylindrical surface. Accordingly, some approximation is accomplished. The relatively large polygons 12 and 14 are convenient and useful for the following explanation.

Note that each of the polygons has a uniform intensity or shade which approximates the shading for a half the curved fragment 10. With lower frontal illumination of the external surface, as illustrated, the polygon 12 is shaded darker than the polygon 14. Techniques of such shading are described in Chapter 25 of the above-referenced book, "Principles of Interactive Computer Graphics".

While uniformly shading the individual polygons defining an object gives some realism, such displays tend to have a patchwork appearance. For greater realism, it has been proposed to smoothly shade the polygons over the entire surface of the simulated object. Techniques for accomplishing smooth shading are treated in the above-referenced book at Chapter 25 and may involve interpolating from the normals at the vertices of each polygon. Note that the surface normal vectors at the vertices of the polygons 12 and 14 are generally indicated by arrows 16 and 18. Note that the surface of the cylindrical fragment 10 coincides to the polygons 12 and 14 at the polygon vertices.

Smooth shading may involve associating each polygon vertex with the corresponding surface normal vector as illustrated in FIGURE 1. A normal vector is interpolated at any point on the interior of the polygon using the surface normal vectors associated with the polygon vertices. As mentioned above, interpolation of normal vectors is called Phong shading. A simpler technique is called Gouraud shading wherein brightness is interpolated rather than normal vectors.

In any event, these as well as other forms of shading involve the interpolation of polygon attributes. With such interpolation, the shade variation from the top edge 20 of the fragment 10 to the bottom edge 22 can be smooth, tending to impart a more realistic appearance for the curved surface.

It is sometimes desirable to interpolate quantities other than normal vectors or brightness for polygons. For example, a surface might be covered with a texture which is to appear in the display. Generally, in computer graphics, the process of applying such patterns to surfaces is called "texture mapping" and is treated in the above-referenced book, "Principles of Interactive Computer Graphics", in Chapter 25. Texture mapping essentially involves locking texture to polygons and is performed by an interpolative process which is analogous to smooth shading.

Again, recapitulating, smooth shading and texture mapping both involve interpolation of polygon attributes. Gouraud shading involves the interpolation of brightness (intensity), a one-dimensional quantity. Phong shading involves interpolation of normal vectors, three-dimensional quantities. Texture mapping involves interpolation of texture patterns which typically are two-dimensional quantities defined in an X,Y-coordinate system. Consequently, Gouraud shading, texture mapping and Phong shading respectively involve the interpolation of one, two and three-dimensional quantities. In accordance with the present invention, improved interpolation of polygons for display is performed in the three-dimensional world-space coordinate system defining the polygons. Such interpolation avoids the nonlinear properties of interpolating in the perspective projection. The operation of the present system is illustrated in FIGURE 2 and will now be considered in detail.

A polygon 24 in the form of a triangle is illustrated in world space (FIGURE 2, upper left). In accordance with traditional techniques, the vertices of the polygon 24 are referenced to a point of origin (not shown) in world space. The world space origin is established with reference to an eyepoint O (FIGURE 2, lower right). Using conventional methods, the polygon 24 readily may be referenced to the eyepoint O in terms of three-dimensional coordinates; see the referenced book, "Principles of Interactive Computer Graphics", at page 339.

As generally explained above, to view the polygon 24 (exemplifying one of many components of an image) from the eyepoint O, the polygon is transformed to a viewing plane or screen 28 in two-dimensional perspective space; see the referenced book, "Principles of Interactive Computer Graphics", at page 341. In accordance with convention, the screen 28 comprises the base of a pyramidal view frustum 30 with an apex 32 at the eyepoint O. In a sense, the viewing screen 28 (at the base of the frustum 30) may be analogized to the screen of a television display through which world-space objects (as the polygon 24) are viewed.

In accordance with well known traditional practice, the two-dimensional perspective space of the screen 28 is dissected into small picture elements or pixels. For example, one million pixels may be organized in an array of one thousand rows, each of one thousand pixels. A representative pixel 34 is illustrated at a central location of the screen 28. Note that a ray 36 extends from the eyepoint O, passing through the center of pixel 34, to the point P. The ray 36 exemplifies thousands of such rays that dissect the image into pixels. Each view ray 36 is defined by a pixel at the screen 28, then continues beyond the screen 28 (pixel intersection) and may intersect polygons in world space comprising the primitives to form an object or the model. In the simplified example of FIGURE 2, after passing through the pixel 34 at the point C, the view ray 36 continues to intersect the polygon 24 at a point P. At this juncture it is noteworthy that the location of the polygon intersection point P is not known in terms of coordinates. If the point P were defined, the polygon in world space could be interpolated; however, such is not the case. However, in accordance herewith it has been discovered that data is available to perform the interpolation in an economical system. Such interpolation enables effective smooth shading and texture mapping.

In accordance herewith, treating the point P, and accordingly interpolating the polygon 24 as a triangle involves the use of barycentric coordinates as well known in the computer graphics art. Specifically, barycentric coordinates are treated in a paper entitled, "Representation and Approximation of Surfaces", by Robert E. Barnhill, appearing in Mathematical Software III, published in 1977 by Academic Press, Inc. Some basic explanation of barycentric coordinates as utilized herein will now be given.

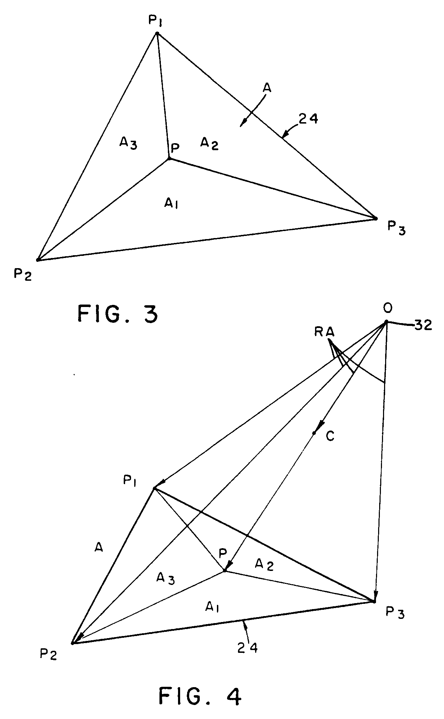

FIGURE 3 shows the triangular polygon 24 in a planar view. Assume that the points $P_1$, $P_2$ and $P_3$ are defined in a world-space three-dimensional coordinate system. Note that, as described above, the point P lies in the plane of the polygon. Recognizing that the point P may be defined in terms of the points $P_1$, $P_2$ and $P_3$ using the equation, $P = b_1P_1 + b_2P_2 + b_3P_3$, where $b_1$, $b_2$ and $b_3$ are called the barycentric coordinates of the point P. Note that the point P is defined by a unique set of barycentric coordinates and further that the coordinates $b_1 + b_2 + b_3 = 1$. The equation means that by applying the barycentric coordinates, the point P can be calculated as a linear combination of the points $P_1$, $P_2$ and $P_3$. For example, if $b_1=1$, $b_2=0$ and $b_3=0$, the defined point lies at the vertex $P_1$. As another simple example, if: $b_1=1/3$, $b_2=1/3$ and $b_3=1/3$, the point P lies in the center of the triangular polygon 24.

To further treat barycentric coordinates, consider the following definitions:

As illustrated in FIGURE 3, A is the area of triangle $P_1P_2P_3$ (polygon 24), $A_1$ is the area of triangle $PP_2P_3$, $A_2$ is the area of triangle $PP_3P_1$, and $A_3$ is the area of triangle $PP_1P_2$.

The barycentric coordinates for the triangle $P_1P_2P_3$ can be calculated as:

$$b_1 = A_1/A$$
$$b_2 = A_2/A$$
$$b_3 = A_3/A$$

As disclosed in the above-referenced Barnhill paper, since it is obvious from inspection of FIGURE 3 that:

$$A = A_1 + A_2 + A_3,$$

the barycentric coordinates may be expressed as:

$$b_1 = A_1/(A_1 + A_2 + A_3)$$
$$b_2 = A_2/(A_1 + A_2 + A_3)$$
$$b_3 = A_3/(A_1 + A_2 + A_3)$$

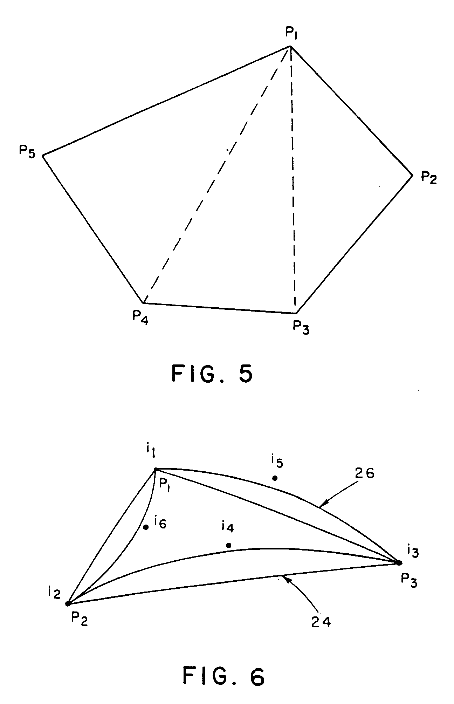

In the application of the above equations, it is noteworthy that although FIGURE 3 illustrates the point P within the triangle $P_1P_2P_3$ (polygon 24), the barycentric equations are relevant if the point P lies anywhere in the plane of the triangle, even if the point P lies outside the triangle. Thus, determination of the point P in barycentric coordinates to enable interpolation is general and may be applied to nontriangular polygons as well. For example, consider FIGURE 5 which shows a pentagon $P_1P_2P_3P_4P_5$. Any triangle within this pentagon (as illustrated), such as triangle $P_1P_3P_4$, may be used for computation of barycentric coordinates $b_1$, $b_2$ and $b_3$. These barycentric coordinates may then be used to interpolate the entire pentagon. Furthermore, with the ability to locate each of the pixel ray points, as the point P in the polygon 24, using barycentric coordinates, the polygon can be shaded or texture mapped.

At this juncture, some conventions should be mentioned that will be used to pursue the explanation.

A vector is designated by the components of the vector placed in parentheses and separated by commas. For example, if point P (FIGURE 3) were defined in a three-dimensional coordinate system, the vector from the origin to point P could be represented by (x,y,z) utilizing the x, y and z coordinates of point P. Somewhat analogously, the barycentric coordinates of the point P are represented by the vector $(b_1, b_2, b_3)$.

The calculation of the barycentric coordinates of the polygon 24 in accordance herewith will now be explained. Referring to FIGURE 4, the triangle $P_1P_2P_3$ (polygon 24) is shown in three-dimensional space with rays RA extending from the eyepoint 32 to vertices P, $P_1$, $P_2$ and $P_3$. In considering the figure, a form of vector notation will be employed wherein the starting point of a vector is followed by the endpoint, both points being in boldface type. Accordingly, the vector from point O (eyepoint 32) to point P is denoted OP.

We normally think of points as determined by coordinates in a Cartesian coordinate system. However, if O is at $(x_o, y_o, z_o)$ and P is at $(x_p, y_p, z_p)$, then OP can be represented by:

$$OP = [(x_p - x_o)(y_p - y_o)(z_p - z_o)].$$

Vector manipulation as related to computer graphics is treated in an Appendix I of the above-referenced book, "Principles of Interactive Computer Graphics". Specifically, operations are explained and described on three-dimensional vectors including dot products and cross-products as used below.

In FIGURE 4, the vector OP (origin O or eyepoint 32 to point P) passes through the point C which is in the plane of the two-dimensional screen 28 (FIGURES 2 and 4). Specifically, the point C (FIGURE 4) is the center of the pixel 34. The continuation of the vector OC (beyond the point C) intersects the polygon 24 at the point P to define the vector OP. As the coordinates of the polygon 24 are known, the following definitions apply:

V is the volume of tetrahedron $OP_1P_2P_3$ whose base is triangle $P_1P_2P_3$ having area A,

$V_1$ is the volume of tetrahedron $OPP_2P_3$ whose base is triangle $PP_2P_3$ having area $A_1$,

$V_2$ is the volume of tetrahedron $OPP_3P_1$ whose base is triangle $PP_3P_1$ having area $A_2$,

$V_3$ is the volume of tetrahedron $OPP_1P_2$ whose base is triangle $PP_1P_2$ having area $A_3$.

Further, make the following supplemental definitions:

T is the triple product of vectors $OP_1$, $OP_2$ and $OP_3$,

$T_1$ is the triple product of vectors OP, $OP_2$ and $OP_3$,

$T_2$ is the triple product of vectors OP, $OP_3$ and $OP_1$,

$T_3$ is the triple product of vectors OP, $OP_1$ and $OP_2$.

Accordingly, from the above, the following relations hold:

$$V = T/6$$
$$V_1 = T_1/6$$
$$V_2 = T_2/6$$
$$V_3 = T_3/6$$

These relationships are discussed in a book entitled, "Elements of Analytic Geometry", by Paul J. Kelly and Ernst G. Straus (pages 144-145), published by Scott, Foresman & Co., 1970. The book further states the truism that the volume of a tetrahedron is equal to one-third the product of its base area times its perpendicular height. Since the bases of the four tetrahedrons mentioned above are simply the triangles whose areas are A, $A_1$, $A_2$ and $A_3$, the following relations hold:

$$V = hA/3$$
$$V_1 = hA_1/3$$
$$V_2 = hA_2/3$$
$$V_3 = hA_3/3$$

In the above equations, h is the perpendicular height from the plane of the triangle $P_1P_2P_3$ to the

point O. Combining the above equations in terms of $V$, $V_1$, $V_2$ and $V_3$ yields:

$$A = T/2h$$
$$A_1 = T_1/2h$$
$$A_2 = T_2/2h$$
$$A_3 = T_3/2h$$

Further, combining the barycentric equations with the above yields:

$$b_1 = T_1/(T_1 + T_2 + T_3)$$
$$b_2 = T_2/(T_1 + T_2 + T_3)$$
$$b_3 = T_3/(T_1 + T_2 + T_3)$$

At this point it is important to recognize that the above equations would be useful except for the fact that $T_1$, $T_2$ and $T_3$ were calculated using the vector $OP$, and the coordinates of point P (FIGURE 4) are not known. However, a discovery of the present invention overcomes the problem. It may be seen by inspection of FIGURE 4 that the vector $OP$ is proportional to the vector $OC$. That is, $OP = qOC$, where $q$ is a proportionality constant, or scalar, albeit an unknown.

In view of the above and in the interests of proceeding, consider defining the following three triple products:

$K_1$ is the triple product of vectors $OC$, $OP_2$ and $OP_3$,

$K_2$ is the triple product of vectors $OC$, $OP_3$ and $OP_1$,

$K_3$ is the triple product of vectors $OC$, $OP_1$ and $OP_2$.

Accordingly, the following relations are true:

$$T_1 = qK_1$$
$$T_2 = qK_2$$
$$T_3 = qK_3$$

The above equations are true because multiplying one of the vectors in a triple product by a scalar, such as $q$, results in multiplying the value of the triple product by the same scalar. Accordingly, combining equations for the barycentric coordinates with the above yields the following useful result in which the unknown scalar, $q$, has fallen out.

$$b_1 = K_1/(K_1 + K_2 + K_3)$$
$$b_2 = K_2/(K_1 + K_2 + K_3)$$
$$b_3 = K_3/(K_1 + K_2 + K_3)$$

The particular significance of the above equations is the fact that $K_1$, $K_2$ and $K_3$ are computed using known vectors $OC$, $OP_1$, $OP_2$ and $OP_3$ (FIGURE 4) all readily available in the graphics computations. That is, the vertices $P_1$, $P_2$ and $P_3$ are known along with the coordinates of the point O and the point C. While the location of the point P is not known, as developed mathematically above, the vector $OC$ can be employed rather than the vector $OP$ which is unknown. Thus, the barycentric coordinates for the point P are established by the above useful equations and, accordingly may be effectively employed to interpolate all ray points on the polygon 24 for pixels.

Consider a specific example. Once the barycentric coordinates $b_1$, $b_2$ and $b_3$ are calculated in terms of $K_1$, $K_2$ and $K_3$, they may be used for interpolation and accordingly for smooth shading. Suppose, for example, that Gouraud shading is desired with the consequence that an intensity is associated with each of the points $P_1$, $P_2$ and $P_3$ (FIGURE 4). The three intensity values may be designated by the vector $(i_1, i_2, i_3)$. Then the intensity $i$ at the point P may be interpolated linearly as: $i = b_1 i_1 + b_2 i_2 + b_3 i_3$.

Alternatively, since the above equation is really just a dot product, and since the barycentric coordinates may themselves be represented as a vector (as suggested above), the equation may be rewritten as: $i = (b_1, b_2, b_3) \cdot (i_1, i_2, i_3)$. Accordingly, the polygon 24 can be smooth shaded by scan conversion to determine the pixel locations (for example pixel center C); see the referenced book, "Principles of Interactive Computer Graphics", at Chapter 16. The shade intensity for each pixel can then be developed by applying the equation:

$$i = b_1 i_1 + b_2 i_2 + b_3 i_3.$$

Phong shading can be accomplished using a similar technique, except that instead of interpolating a single intensity value for each pixel, e.g. at the point P, the three components of the surface normal vector are interpolated for each pixel in accordance with the Phong shading technique.

Barycentric coordinates also may be used for texture mapping. Specifically, assume the existence of a texture x,y-coordinate associated with each of the points $P_1$, $P_2$ and $P_3$ (FIGURE 4). These three texture x,y-coordinates may be designated by the vectors $(tx_1, tx_2, tx_3)$ and $(ty_1, ty_2, ty_3)$. The texture x,y-coordinates $tx$ and $ty$ at the point P may be interpolated linearly as:

$$tx = (b_1, b_2, b_3) \cdot (tx_1, tx_2, tx_3)$$
$$ty = (b_1, b_2, b_3) \cdot (ty_1, ty_2, ty_3)$$

Applying the above equations for each pixel maps the texture onto the polygon for a consistent and effective display. Thus, the system of the present invention enables applications of polygon interpolation for improved computer graphics displays.

It is possible to use barycentric coordinates to perform interpolation other than linear interpolation. For example, the above discussion of intensity interpolation described linear interpolation accomplished by means of a dot product. However, FIGURE 6 depicts intensity interpolation using quadratic interpolation. Referring to FIGURE 6, triangle $P_1 P_2 P_3$ (polygon 24) is shown superimposed on a quadratic, Bezier surface 26 defined by intensity values $i_1$ through $i_6$. Intensity values $i_1$, $i_2$ and $i_3$ lie on the surface while intensity values $i_4$, $i_5$ and $i_6$ lie near the surface, in accordance with the standard definition of a quadratic, Bezier surface. Bezier surfaces are well known in the prior art and are treated in U. S. Patent 4,646,251, issued February 24, 1987 to Hayes, Brown, Jensen and Madsen. Intensity surface 26 defines the manner in which quadratic interpolation of intensity is to be calculated on polygon 24. Specifically, the intensity i at point P on the polygon is given by the following equation: $i = i_1 b_1^2 + i_2 b_2^2 + i_3 b_3^2 + i_4 b_2 b_3 + i_5 b_3 b_1 + i_6 b_1 b_2$ Bezier interpolation formulae are well known in the prior art and are described on page 38 of a paper entitled, "A survey of curve and surface methods in CAGD", by Wolfgang Bohm, Gerald Farin, and Jurgen Kahmann, appearing in Computer Aided Geometric Design, published in 1984 by Elsevier Science Publishers B.V. In a manner analogous to that shown for quadratic, Bezier interpolation, barycentric coordinates may be used to perform interpolation of any degree greater than or equal to one.

Typically, in the computation of images that apply hidden surface algorithms, each polygon embraces several pixels. In the above equations defining $b_1$, $b_2$ and $b_3$ in terms of $K_1$, $K_2$ and $K_3$, three triple products per pixel are necessary for smooth shading and texture mapping each pixel. Since a triple product is the determinant of a three-by-three matrix, the calculation of three triple products requires the calculation of three such determinants; a considerable amount of computation. Alternatively, however, it is possible to express a triple product as a dot product and a cross product. In that regard, the quantities $K_1$, $K_2$ and $K_3$ may be expressed using cross products and dot products as follows:

$$K_1 = OC \cdot [OP_2 \times OP_3]$$
$$K_2 = OC \cdot [OP_3 \times OP_1]$$
$$K_3 = OC \cdot [OP_1 \times OP_2]$$

Cross products and dot products are treated in Appendix 1 of the above-referenced book, "Principles of Interactive Computer Graphics". For a particular image, it will be noted that the point O at the eyepoint is constant. Also for a particular image, the points $P_1$, $P_2$ and $P_3$ also are constant for each polygon. Therefore, for each polygon, vectors $OP_1$, $OP_2$ and $OP_3$ are constant and so are the cross products of these vectors shown in the above equations. Consequently, these products may be computed and stored once per polygon per image. Thereafter, to perform smooth shading and texture mapping, interpolation at a particular pixel, the vector OC must be created and combined as a dot product with the three precomputed cross-product values of $OP_1$, $OP_2$ and $OP_3$. In that manner, the barycentric coordinates are calculated. Note that this approach effectively reduces the computation required at each pixel by performing three dot products instead of three triple products. As another advantage, the system hereof for developing the barycentric coordinates requires the same type of computation as does the interpolation, i.e. dot products. Reducing the computation required at each pixel to some number of dot products helps to make the computation homogeneous and thereby simplify the computer hardware required for the computation.

Often it is desirable to compute the distance from the eyepoint O (FIGURE 2) to the point P on the polygon 24. For example, the distance OP may be utilized to simulate fog as part of the smooth shading computation. One method for computing this distance is to utilize the equations for $K_1$, $K_2$ and $K_3$ to calculate the barycentric coordinates; then to use the above-mentioned equation $P = b_1 P_1 + b_2 P_2 + b_3 P_3$ from which the x,y,z coordinates may be used to compute the point P after which the vector OP can be computed.

The process for interpolating polygons in accordance herewith is illustrated in FIGURE 5. The hidden-surface process can be distinct or intimately involved with the interpolation process, both generally being considered a part of the required hardware in display processors. Typically, structure is utilized to scan solid areas dissecting them into individual pixels. Accordingly, with the present development, the data for smooth shading would be determined for the individual pixels and registered in a buffer. However, the process hereof is illustrated in FIGURE 5 independent of polygon priority or resolving hidden surface questions.

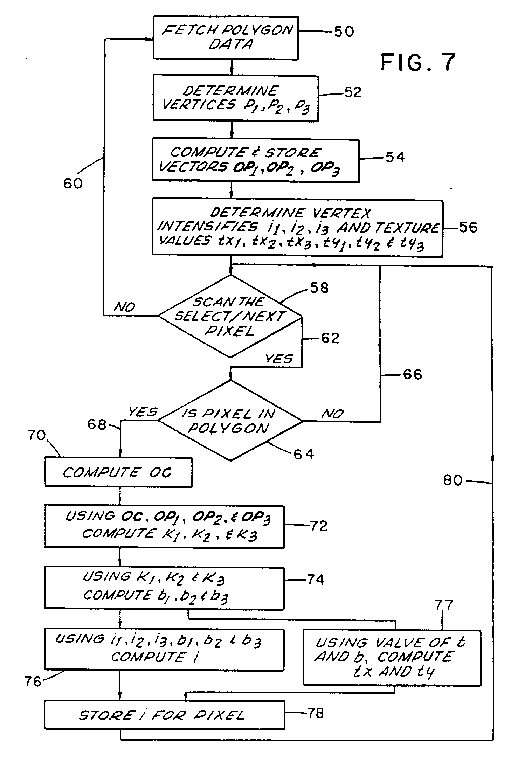

Referring to FIGURE 7, the first block 50 indicates "fetch polygon data". Essentially, polygons may be treated in sequence and in that regard, the polygons may have been reduced to individual triangles in accordance with well known techniques of the prior art and, as indicated above, the hidden surface priorities may be independently treated.

Assuming the polygon as a triangle, with available data the vertices $P_1$, $P_2$ and $P_3$ are determined as indicated by the block 52.

As the next step, represented by the block 54, the vectors $OP_1$, $OP_2$ and $OP_3$ are computed and stored for use throughout the processing of the current triangle.

As indicated by the block 56, the next step involves computing the vertex intensities from the polygon data. Specifically, the intensities $i_1$, $i_2$ and $i_3$ are computed as indicated. These values are registered for use throughout the processing of the current triangle.

The next step involves a junction depending on whether the scanning of the polygon is complete. As indicated, the diamond 58 illustrates the operation to "scan select the next pixel", provided that untreated pixels remain in the polygon. If the polygon has been completely scanned, as indicated by the line 60, the system returns to the block 50 and the next polygon is fetched.

Note that the scan operation as indicated by the diamond 58 is a well known technique in computer graphics. Specifically in that regard, the scan conversion of solid areas is treated specifically in Chapter 16 of the above-referenced book, "Principles of Interactive Computer Graphics".

In the process as illustrated in FIGURE 7, if unprocessed pixels remain in the polygon, as indicated by the diamond 58, the next pixel is selected and the process continues as indicated by the line 62.

Another query is posed by the diamond 64, specifically, "is the pixel in the polygon?" If not, as indicated by the line 66, the process returns to the diamond 58 and the scan process seeks the next pixel. Alternatively, if the pixel under consideration is in the polygon as (indicated by the line 68) the process proceeds to the step of block 70, compute the vector OC.

The next step in the process is represented by the block 72 and involves the use of the vectors OC, $OP_1$, $OP_2$ and $OP_3$ to compute the values of $K_1$, $K_2$ and $K_3$. The details of these computations were treated above.

With completion of the quantities $K_1$, $K_2$ and $K_3$, the barycentric coordinates $b_1$, $b_2$ and $b_3$ are computed for the pixel as indicated by the process block 74. Consequently, a basis exists for interpolating the polygon (triangle) to accomplish smooth shading or texture mapping as described above.

Implementations of the system of the present invention may involve computing the barycentric coordinates in accordance herewith for any of a variety of functions. Recapitulating, that computation involves the computation of the triple products of the vectors OC, $OP_1$, $OP_2$ and $OP_3$ followed by the computation of the barycentric coordinates with a proportionality constant (equating the vector OC to the vector OP) which is eliminated. Of course, any of a variety of computing networks or facilities can be employed to accomplish such calculations in accordance with well known principles of the prior art.

As illustrated in FIGURE 7 at block 76, the smooth shading operation is accomplished by using the vertex intensities $i_1$, $i_2$ and $i_3$ along with the barycentric coordinates $b_1$, $b_2$ and $b_3$ to compute a value of intensities i for the specific pixel. The operation produces a pixel intensity value. So also, texture mapping may be performed as explained above and as illustrated by block 77.

The pixel values computed as indicated by the blocks 76 and 77 are stored as illustrated by the block 78. Normally, storage would be in a frame buffer preparatory to the display using well known techniques of the prior art. With the completion of the storage as represented by the block 78, the process returns to scan the next pixel as indicated by the line 80.

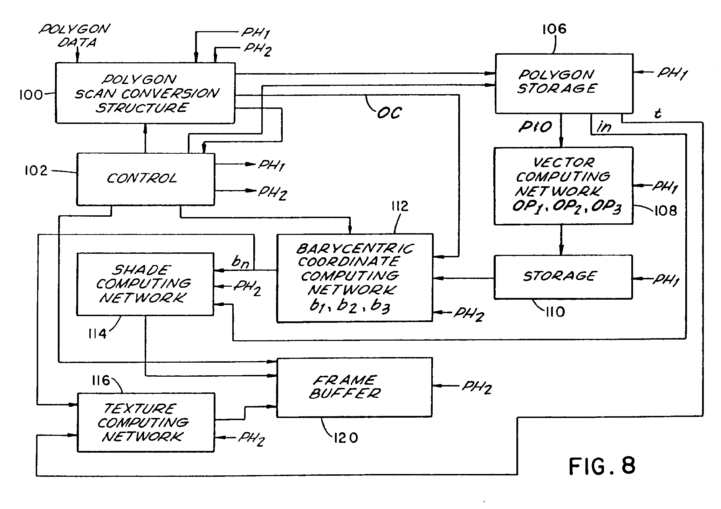

The calculation of the barycentric coordinates in accordance herewith for application to computer graphics operations is illustrated in FIGURE 8 specifically with regard to texture mapping and smooth shading. These operations were described in detail above, accordingly the following explanation relates structure to the process.

Referring to FIGURE 8, a polygon scan conversion structure 100 (upper left) receives polygon data as from transformation hardware in a display processor. Essentially, in accordance with the prior art, primitive data (representing polygons) is transformed preparatory to further processing. Essentially, the further processing may incorporate shading and texture mapping in accordance herewith. Such operations may be accomplished by the structure as illustrated in FIGURE 8.

The texturing and shading of individual polygons is executed by the illustrative system in two phases, i.e. phase $PH_1$ and phase $PH_2$. Signals indicative of the two phases $PH_1$ and $PH_2$ are provided by a control 102. It is to be appreciated that the control 102, along with the polygon scan conversion structure 100, typically would be incorporated in a total computer graphics system of considerable complexity. However, for purposes of the present invention, which involves a specific system for generating barycentric coordinates for specific functions, the structure of FIGURE 8 is segregated so as to afford a manageable presentation.

The control 102 provides the signals $PH_1$ and $PH_2$ in a manner to sequence the operation of the components as illustrated in the system of FIGURE 8. Generally in that regard, the initial phase $PH_1$, defined by the signal also termed $PH_1$, involves the preliminary processing of a fresh polygon. The second phase $PH_2$, defined by the signal $PH_2$, affords the computation of intensity and texture values for each individual pixel as the current polygon is scan converted.

The polygon scan conversion structure 100 is coupled to a polygon storage 106 and to a computing network 112. The polygon storage 106 receives the polygon data during the initial phase $PH_1$ and in turn supplies specific components of the data to operating units during phases $PH_1$ and $PH_2$. Specifically, the storage 106 supplies the vertex data O, $P_1$, $P_2$ and $P_3$ to a computing network 108 during the initial phase $PH_1$. With such data, the network 108 computes the vectors $OP_1$, $OP_2$ and $OP_3$ utilizing available computing elements. The representations of the computed vectors are placed in a storage 110. During the second phase $PH_2$ of operation, the scan conversion structure 100 supplies values which are pertinent to each individual pixel to the computing network 112. Specifically, a value representative of the vector OC associated with a pixel lying within the polygon is supplied from the structure 100 to a computing network 112 that also is coupled to the storage 110. Additionally, the intensity signals $i_1$, $i_2$ and $i_3$ are provided from the polygon storage 106 to a shade computing network 114. The barycentric coordinates as represented by the signals $b_1$, $b_2$ and $b_3$ from the network 112 also are supplied to the shade computing network 114. Somewhat similarly, the barycentric coordinates are provided from the computing network 112 to a texture computing network 116 which also receives texture signals $tx_1$, $tx_2$, $tx_3$, $ty_1$, $ty_2$ and $ty_3$ from the polygon storage 106.

Considering the operation of the system of FIGURE 8, the polygon data is received in the structure 100 for specific analysis and distribution. In that regard, the structure 100 is actuated by the control 102 which sequences the distinct phases and controls the operations.

During the phase $PH_1$, the preliminary data of a polygon is received by the polygon scan conversion structure 100. Subsequently, during the phase $PH_1$, this data is transmitted to the polygon storage 106. Subsequently, during the phase $PH_1$, the polygon storage 106 transmits points $P_1$, $P_2$, $P_3$ and O to the computing network 108 which calculates the vectors $OP_1$, $OP_2$ and $OP_3$ and transmits them to the storage 110. Subsequently, during the phase $PH_2$, the polygon scan conversion structure 100 determines which pixels lie within the polygon utilizing scan conversion operations, and provides a unique vector OC for each such pixel to be used in shading and texture computations for that individual pixel in accordance herewith. Specifically, as each pixel lying within the polygon is encountered, a unique vector OC is transmitted to the computing network, and the computing networks 112, 114 and 116 are actuated to calculate shade and texture pixel data. During the processing for each pixel, the barycentric coordinates $b_1$, $b_2$ and $b_3$ are computed for the pixel and applied to the computing networks 114 and 116. The network 114 accomplishes the appropriate shade for the pixel applying the equation $i = b_1i_1 + b_2i_2 + b_3i_3$. As indicated above, the equation also might be represented as: $i = (b_1, b_2, b_3) \cdot (i_1, i_2, i_3)$. The determined values of i (one for each pixel) are registered in the frame buffer during the interval $PH_2$ in accordance with the particular display format.

Concurrent with the above operations, the texture mapping operation is performed by the texture computing network 116. Specifically, the calculation involves the determination of values tx and ty by the network 116 executing the equations:

$$tx = (b_1, b_2, b_3) \cdot (tx_1, tx_2, tx_3)$$
$$ty = (b_1, b_2, b_3) \cdot (ty_1, ty_2, ty_3).$$

Again, the texture mapping values for each pixel are registered in the frame buffer 120 in accordance with the display format of the system.

From the above it may be seen that the system of the present invention enables the determination of barycentric coordinates for polygons in order to accomplish such specific operations as smooth shading and texture mapping. As indicated above, various other computer graphics operations can be accomplished to afford data signals for computer graphics displays by utilizing such barycentric coordinates. Accordingly, it will be readily appreciated from the above explanation that the system hereof is susceptible to a large number of modifications and deviations within the basic conceptual network. Accordingly, the scope hereof is deemed to be as set forth in the claims below.

## Claims

1. A process of interpolating a graphic object (10) as for shading or texturing for determining pixel data in a computer graphics system, comprising the steps of:

    defining, in a space not subject to linear distortion, at least a part of said object as a planar polygon having at least three vertices;

    selecting the vertices of a triangular polygon (24) lying within said planar polygon, said vertices of said triangular polygon designated $P_1$, $P_2$ and $P_3$ ;

    characterised in that the process comprises the steps of:

    defining an eyepoint O in relation to said planar polygon to resolve vectors $OP_1$, $OP_2$, $OP_3$ from said eyepoint to said vertices;

    defining a perspective plane (28) in relation to said eyepoint and specifying a pixel location (34) in said plane whereby a ray extending from said eyepoint to said pixel defines a vector OC from said eyepoint to said pixel;

    defining a space point (P) where a scalar multiple of said vector OC intersects the plane of said planar polygon;

    generating the multiple products of the vectors OC, $OP_1$, $OP_2$, $OP_3$ defined as $K_1$, $K_2$, $K_3$;

    computing barycentric coordinates for said planar polygon as,

    $$b_1 = K_1/(K_1 + K_2 + K_3)$$
    $$b_2 = K_2/(K_1 + K_2 + K_3)$$
    $$b_3 = K_3/(K_1 + K_2 + K_3);$$

    and

    interpolating to accomplish said shading or texturing or to calculate said point for said pixel in accordance with said barycentric coordinates.

2. A process according to claim 1 wherein said step of generating multiple products of the vectors comprises applying equations as a dot product and a cross-product, as

    $$K_1 = OC \cdot [OP_2 \times OP_3]$$
    $$K_2 = OC \cdot [OP_3 \times OP_1]$$
    $$K_3 = OC \cdot [OP_1 \times OP_2].$$

3. A process according to claim 1 or claim 2 wherein said interpolating step comprises interpolation of the intensity of said pixel (34) in accordance with said barycentric coordinates.

4. A process according to claim 3 wherein said interpolation of intensity i is accomplished by a form of the equation, $i = b_1i_1 + b_2i_2 + b_3i_3$.

5. A process according to any preceding claim wherein said interpolating step comprises interpolation of multiple components of a surface normal vector at the space point (P).

6. A process according to any preceding claim wherein said interpolating step comprises interpolation of texture for said pixel (34).

7. A process according to claim 6 wherein texture coordinates for said vertices are designated as vectors $(tx_1,tx_2,tx_3)$ and $(ty_1,ty_2,ty_3)$; and the texture of said space point (P) is interpolated as:
$$tx = (b_1,b_2,b_3)\cdot(tx_1,tx_2,tx_3)$$
$$ty = (b_1,b_2,b_3)\cdot(ty_1,ty_2,ty_3).$$

8. A system for interpolating a graphic object (10) as for shading or texturing pixels, wherein said object is represented, in a space not subject to linear distortion, at least in part by a planar polygon (24) with defined vertices $P_1$, $P_2$, $P_3$ and further, wherein an eyepoint O is specified along with a perspective plane (28) to resolve vectors $OP_1$, $OP_2$, $OP_3$ from said eyepoint O to said vertices and a vector OC from said eyepoint to a pixel (34) on said perspective plane, said system comprising:
    means for generating multiple products of the vectors OC, $OP_1$, $OP_2$, $OP_3$ to provide representations of $K_1$, $K_2$, $K_3$;
    means (112) for computing barycentric coordinates for said planar polygon using a form of the equation,
$$b_1 = K_1/(K_1 + K_2 + K_3)$$
$$b_2 = K_2/(K_1 + K_2 + K_3)$$
$$b_3 = K_3/(K_1 + K_2 + K_3)$$
to provide barycentric signals; and
    means (114, 116) for interpolating said polygon for said pixel in accordance with said barycentric coordinates to provide pixel signals.

9. A process for determining pixel data for use in computer graphics systems to provide a display and wherein triangular, planar areas are scan converted to individual pixel data for said display comprising:
    defining the vertices $P_1$, $P_2$ and $P_3$ of one of said triangular, planar areas (24) as represented computer graphics elements;
characterised in that the process comprises the steps of:
    defining an eyepoint O in relation to one of said triangular, planar areas and computing vectors $OP_1$, $OP_2$ and $OP_3$ as represented computer graphics elements;
    defining a perspective plane (28) in relation to said eyepoint and specifying a pixel location (34) in said plane whereby a ray extending from said eyepoint extends to said pixel and accordingly defines a vector OC from said eyepoint to said pixel;

defining a space point (P) where a scalar multiple of said vector OC intersects the plane of said triangular, planar area;
    generating the multiple products of the vectors OC, $OP_1$, $OP_2$, $OP_3$ defined as $K_1$, $K_2$, $K_3$;
    computing barycentric coordinates for said planar polygon as,
$$b_1 = K_1/(K_1 + K_2 + K_3)$$
$$b_2 = K_2/(K_1 + K_2 + K_3)$$
$$b_3 = K_3/(K_1 + K_2 + K_3);$$
and
    applying representations of said barycentric coordinates to accomplish data for said display.

## Patentansprüche

1. Verfahren zum Interpolieren eines graphischen Objekts (10), wie für das Abtönen oder Strukturieren, um Pixeldaten in einem Computergraphiksystem zu bestimmen, das die Schritte umfaßt:
Definieren wenigstens eines Teils des genannten Objekts als ebenes Polygon mit wenigstens drei Scheitelpunkten in einem Raum, der keiner linearen Verzerrung unterliegt, Auswählen der Scheitelpunkte eines Dreiecks (24), das innerhalb des genannten Polygons liegt, wobei die genannten Scheitelpunkte des genannten Dreiecks mit $P_1$, $P_2$, $P_3$ bezeichnet werden,
dadurch gekennzeichnet, daß das Verfahren die Schritte umfaßt:
Definieren eines Blickpunktes O in bezug auf das genannte ebene Polygon, um Vektoren $OP_1$, $OP_2$, $OP_3$ von dem genannten Blickpunkt zu den genannten Scheitelpunkten aufzulösen,
Definieren einer Bildebene (28) in bezug auf den genannten Blickpunkt und Festsetzen eines Pixelortes (34) in der genannten Ebene, wodurch ein sich von dem genannten Blickpunkt zu dem genannten Pixel erstreckender Strahl einen Vektor OC von dem genannten Blickpunkt zu dem genannten Pixel definiert,
Definieren eines Raumpunktes (P), wo ein skalares Vielfaches des genannten Vektors OC die Ebene des genannten ebenen Polygons schneidet,
Erzeugen der multiplen Produkte der Vektoren OC, $OP_1$, $OP_2$, $OP_3$, die als $K_1$, $K_2$, $K_3$ definiert werden,
Berechnen baryzentrischer Koordinaten für das genannte ebene Polygon als
$$b_1 = K_1/(K_1 + K_2 + K_3)$$
$$b_2 = K_2/(K_1 + K_2 + K_3)$$
$$b_3 = K_3/(K_1 + K_2 + K_3)$$
und
Interpolieren, um das genannte Abtönen oder Strukturieren zu erreichen, oder um den genannten Punkt für das genannte Pixel in Übereinstimmung mit den genannten baryzentrischen Koordinaten zu berechnen.

2. Verfahren nach Anspruch 1, bei dem der genannte Schritt des Erzeugens multipler Produkte der Vektoren das Anwenden von Gleichungen als Skalarprodukt und Vektorprodukt umfaßt, wie

$$K_1 = OC \cdot [OP_2 \times OP_3]$$
$$K_2 = OC \cdot [OP_3 \times OP_1]$$
$$K_3 = OC \cdot [OP_1 \times OP_2].$$

3. Verfahren nach Anspruch 1 oder 2, bei dem der genannte Interpolierschritt die Interpolation der Intensität des genannten Pixels (34) in Übereinstimmung mit den genannten baryzentrischen Koordinaten umfaßt.

4. Verfahren nach Anspruch 3, bei dem die genannte Interpolation der Intensität i durch eine Form der Gleichung $i = b_1 i_1 + b_2 i_2 + b_3 i_3$ erreicht wird.

5. Verfahren nach einem der vorhergehenden Ansprüche, bei dem der Interpolierschritt die Interpolation multipler Komponenten eines Flächennormalenvektors am Raumpunkt (P) umfaßt.

6. Verfahren nach einem der vorhergehenden Ansprüche, bei dem der genannte Interpolierschritt die Interpolation der Struktur für das genannte Pixel (34) umfaßt.

7. Verfahren nach Anspruch 6, bei dem Strukturkoordinaten für die genannten Scheitelpunkte als Vektoren $(tx_1, tx_2, tx_3)$ und $(ty_1, ty_2, ty_3)$ bezeichnet werden und die Struktur des genannten Raumpunktes (P) interpoliert wird als:

$$tx = (b_1, b_2, b_3) \cdot (tx_1, tx_2, tx_3)$$
$$ty = (b_1, b_2, b_3) \cdot (ty_1, ty_2, ty_3).$$

8. System zum Interpolieren eines graphischen Objekts (10), wie für das Abtönen oder Strukturieren von Pixeln, bei dem das genannte Objekt in einem Raum, der keiner linearen Verzerrung unterliegt, wenigstens teilweise durch ein ebenes Polygon (24) mit definierten Scheitelpunkten $P_1$, $P_2$, $P_3$ dargestellt wird, und bei dem weiterhin ein Blickpunkt O zusammen mit einer Bildebene (28) festgesetzt wird, um Vektoren $OP_1$, $OP_2$, $OP_3$ von dem genannten Blickpunkt O zu den genannten Scheitelpunkten und einen Vektor OC von dem genannten Blickpunkt zu einem Pixel (23) in der genannten Bildebene aufzulösen, wobei das genannte System umfaßt:
Mittel zum Erzeugen multipler Produkte der Vektoren OC, $OP_1$, $OP_2$, $OP_3$, um Darstellungen von $K_1$, $K_2$, $K_3$ bereitzustellen,
Mittel (112) zum Berechnen baryzentrischer Koordinaten für das genannte ebene Polygon unter Verwendung einer Form der Gleichung

$$b_1 = K_1 / (K_1 + K_2 + K_3)$$
$$b_2 = K_2 / (K_1 + K_2 + K_3)$$
$$b_3 = K_3 / (K_1 + K_2 + K_3)$$

um baryzentrische Signale bereitzustellen, und Mittel (114, 116) zum Interpolieren des genannten Polygons für das genannte Pixel in Übereinstimmung mit den genannten baryzentrischen Koordinaten, um Pixelsignale bereitzustellen.

9. Verfahren zum Bestimmen von Pixeldaten zur Verwendung bei Computergraphiksystemen, um eine Hervorhebung bereitzustellen und bei dem dreieckige ebene Flächen zu einzelnen Pixeldaten für die genannte Hervorhebung rastergewandelt werden, welches umfaßt:
Definieren der Scheitelpunkte $P_1$, $P_2$, $P_3$ einer der genannten dreieckigen ebenen Flächen (24) als dargestellte Computergraphikelemente,
dadurch gekennzeichnet, daß das Verfahren die Schritte umfaßt:
Definieren eines Blickpunktes O in bezug auf eine der genannten dreieckigen ebenen Flächen (24) und Berechnen von Vektoren $OP_1$, $OP_2$, $OP_3$ als dargestellte Computergraphikelemente,
Definieren einer Bildebene (28) in bezug auf den genannten Blickpunkt und Festsetzen eines Pixelortes (34) in der genannten Ebene, wodurch ein von dem genannten Blickpunkt ausgehender Strahl sich zu dem genannten Pixel erstreckt und folglich einen Vektor OC von dem genannten Blickpunkt zu dem genannten Pixel definiert,
Definieren eines Raumpunktes (P), wo ein skalares Vielfaches des genannten Vektors OC die Ebene der genannten dreieckigen ebenen Fläche schneidet,
Erzeugen der multiplen Produkte der Vektoren OC, $OP_1$, $OP_2$, $OP_3$, die als $K_1$, $K_2$, $K_3$ definiert werden,
Berechnen baryzentrischer Koordinaten für das genannte ebene Polygon als

$$b_1 = K_1 / (K_1 + K_2 + K_3)$$
$$b_2 = K_2 / (K_1 + K_2 + K_3)$$
$$b_3 = K_3 / (K_1 + K_2 + K_3)$$

und
Anwenden der Darstellungen der genannten baryzentrischen Koordinaten, um Daten für die genannte Hervorhebung zu erreichen.

**Revendications**

1. Procédé d'interpolation d'un objet graphique (10) comme pour obtenir un effet d'ombre ou une texture de surface, pour déterminer des données de pixels dans un système de graphique informatisé, comprenant les étapes consistant à:

définir, dans un espace non sujet à distortion linéaire, au moins une partie dudit objet comme un polygone plan comportant au moins trois sommets;

sélectionner les sommets d'un polygone triangulaire (24) se situant dans ledit polygone plan, lesdits sommets dudit polygone triangulaire étant désignés par P1, P2 et P3;

définir un point de l'oeil O par rapport audit polygone plan pour résoudre les vecteurs OP1, OP2, OP3 à partir dudit point de l'oeil jusqu'aux dits sommets;

définir un plan en perspective (28) par rapport audit point de l'oeil et spécifier un emplacement de pixel (34) dans ledit plan, un rayon qui s'étend ainsi à partir dudit point de l'oeil jusqu'audit pixel définit un vecteur OC à partir dudit point de l'oeil jusqu'au dit pixel;

définir un point spacial (P) auquel un multiple scalaire dudit vecteur OC croise le plan dudit polygone plan;

générer les produits multiples des vecteurs OC, OP1, OP2, OP3 définis comme K1, K2, K3;

calculer les coordonnées barycentriques pour ledit polygone plan telles que,

$$b1 = K1/(K1 + K2 + K3)$$
$$b2 = K2/(K1 + K2 + K3)$$
$$b3 = K3/(K1 + K2 + K3);$$

et

assurer l'interpolation pour réaliser ledit effet d'ombre ou la texture de surface ou pour calculer ledit point pour ledit pixel selon lesdites coordonnées barycentriques.

2. Procédé selon la revendication 1, caractérisé en ce que ladite étape de génération de produits multiples des vecteurs consiste à appliquer des équations sous forme d'un produit scalaire et d'un produit cartésien, telles que:

$$K1 = OC.[OP2 \times OP3]$$
$$K2 = OC.[OP3 \times OP1]$$
$$K3 = OC.[OP1 \times OP2]$$

3. Procédé selon la revendication 1 ou la revendication 2, caractérisé en ce que ladite étape d'interpolation comprend l'interpolation de l'intensité dudit pixel (34) en fonction desdites coordonnées barycentriques.

4. Procédé selon la revendication 3, caractérisé en ce que ladite interpolation de l'intensité i est réalisée par une forme de l'équation, $i = b1i1 + b2i2 + b3i3$.

5. Procédé selon l'une quelconque des revendications précédentes, caractérisé en ce que ladite étape d'interpolation comprend l'interpolation de composantes multiples d'un vecteur normal de surface au point spacial (P).

6. Procédé selon l'une quelconque des revendications précédentes, caractérisé en ce que ladite étape d'interpolation comprend l'interpolation de la texture de surface pour ledit pixel (34).

7. Procédé selon la revendication 6, caractérisé en ce que les coordonnées de la texture de surface pour lesdits sommets sont désignés comme des vecteurs (tx1, tx2, tx3) et (ty1, ty2, ty3); et la texture de surface dudit point spacial (I) est interpolée sous la forme suivante:

$$tx = (b1, b2, b3).(tx1, tx2, tx3)$$
$$ty = (b1, b2, b3).(ty1, ty2, ty3).$$

8. Système pour interpoler un objet graphique (10) comme pour obtenir un effet d'ombre ou une texture de surface de pixels, caractérisé en ce que ledit objet est représenté, dans un espace non sujet à distortion linéaire, au moins en partie par un polygone plan (24) avec des sommets définis P1, P2, P3 et en outre, selon lequel un point de l'oeil O est spécifié avec un plan en perspective (28) pour résoudre les vecteurs OP1, OP2, OP3 à partir dudit point de l'oeil O jusqu'aux dits sommets et un vecteur OC à partir dudit point de l'oeil jusqu'à un pixel (34) sur ledit plan en perspective, ledit système comprenant:

des moyens pour générer des produits multiples des vecteurs OC, OP1, OP2, OP3 pour assurer des représentations de K1, K2, K3;

des moyens (112) pour calculer les coordonnées barycentriques pour ledit polygone plan à l'aide d'une forme de l'équation,

$$b1 = K1/(K1 + K2 + K3)$$
$$b2 = K2/(K1 + K2 + K3)$$
$$b3 = K3/(K1 + K2 + K3)$$

pour fournir des signaux barycentriques; et

des moyens (114, 116) pour assurer l'interpolation dudit polygone pour ledit pixel en fonction desdites coordonnées barycentriques pour fournir les signaux de pixels.

9. Procédé pour déterminer des données de pixels prévu pour être utilisé dans un système graphique informatisé pour assurer une visualisation, et selon lequel des zones planes, triangulaires sont converties par balayage de leur image en données de pixels individuels pour ladite visualisation, consistant à :

définir les sommets P1, P2 et P3 d'une desdites zones planes, triangulaires (24) sous forme d'éléments graphiques informatisés;
caractérisé en ce que le procédé comprend les étapes consistant à:

définir un point de l'oeil O par rapport à l'une desdites zones planes, triangulaires et calculer les vecteurs OP1, OP2, OP3 sous forme d'éléments de graphiques informatisés;

définir un plan en perspective (28) par rapport audit point de l'oeil et à spécifier un emplacement de pixel (34) dans ledit plan, un rayon qui s'étend ainsi à partir dudit point de l'oeil jusqu'audit pixel définit un vecteur OC à partir dudit point de l'oeil jusqu'au dit pixel;

définir un point spatial (P) auquel un multiple scalaire dudit vecteur OC croise le plan de ladite zone triangulaire, plane;

générer les produits multiples des vecteurs OC, OP1, OP2, OP3 définis comme K1, K2, K3;

calculer les coordonnées barycentriques pour ledit polygone plan comme,

$$b1 = K1/(K1 + K2 + K3)$$
$$b2 = K2/(K1 + K2 + K3)$$
$$b3 = K3/(K1 + K2 + K3);$$

et

appliquer les représentations desdites coordonnées barycentriques pour obtenir les données pour ladite visualisation.

FIG. 1

FIG. 2

14

FIG. 3

FIG. 4

FIG. 5

FIG. 6

FIG. 7

FETCH POLYGON DATA ──50

DETERMINE VERTICES $P_1, P_2, P_3$ ──52

COMPUTE & STORE VECTORS $OP_1, OP_2, OP_3$ ──54

DETERMINE VERTEX INTENSIFIES $i_1, i_2, i_3$ AND TEXTURE VALUES $tx_1, tx_2, tx_3, ty_1, ty_2 \& ty_3$ ──56

60

NO

SCAN THE SELECT / NEXT PIXEL ──58

──62

YES

──66

YES ── IS PIXEL IN POLYGON ── NO
68 ──64

70

COMPUTE OC ──70

80

USING $OC, OP_1, OP_2, \& OP_3$ COMPUTE $K_1, K_2, \& K_3$ ──72

USING $K_1, K_2 \& K_3$ COMPUTE $b_1, b_2 \& b_3$ ──74

77

USING $i_1, i_2, i_3, b_1, b_2 \& b_3$ COMPUTE $i$

76

USING VALVE OF $t$ AND $b$, COMPUTE $tx$ AND $ty$

STORE $i$ FOR PIXEL ──78

FIG. 8